# EUROPÄISCHE PATENTSCHRIFT

(11) **EP 1 611 373 B1**
(45) Veröffentlichungstag und Bekanntmachung des Hinweises auf die Patenterteilung: **24.11.2010**
(21) Anmeldenummer: 04723904.1
(22) Anmeldetag: 27.03.2004
(51) Int. Cl.: F16H 37/04

(54) **GETRIEBE, INSBESONDERE AUTOMATISIERTES LEISTUNGSVERZWEIGTES MEHRGANGGETRIEBE**
TRANSMISSION, IN PARTICULAR AN AUTOMATED POWER-BRANCHED MULTI-SPEED GEARING
TRANSMISSION, EN PARTICULIER TRANSMISSION A PLUSIEURS VITESSES AUTOMATISEES A DERIVATION DE PUISSANCE

(30) Priorität: 04.04.2003 DE 10315313
(43) Veröffentlichungstag der Anmeldung: 04.01.2006
(73) Patentinhaber: ZF Friedrichshafen AG, 88038 Friedrichshafen (DE)
(72) Erfinder: GUMPOLTSBERGER, Gerhard, 88045 Friedrichshafen (DE)
(86) Internationale Anmeldenummer: PCT/EP2004/003274
(87) Internationale Veröffentlichungsnummer: WO 2004/088174

(56) Entgegenhaltungen:
- EP-A- 0 517 604
- DE-A- 10 145 519
- US-A- 4 046 031
- US-A- 5 013 289
- US-A- 5 567 201
- US-A- 5 971 883

## Beschreibung

Die Erfindung betrifft ein Getriebe, insbesondere ein automatisiertes leistungsverzweigtes Mehrganggetriebe, mit wenigstens drei Leistungszweigen.

Aus der Praxis allgemein bekannte automatisierte Schaltgetriebe basieren vorwiegend auf dem Prinzip herkömmlicher Handschaltgetriebe in Vorgelegebauweise, bei welchen eine Schaltung mit Hilfe von als Synchronisierungen ausgeführten Schaltelementen erfolgt, welche durch einen geringen Bauraumbedarf gekennzeichnet sind. Im Gegensatz dazu weisen die leistungsbestimmenden Elemente eines Vorgelegegetriebes, die aufgrund ihrer hohen Lebensdauer und ihres hohen Wirkungsgrades meist als Stirnradstufen ausgeführt sind, einen großen Bauraumbedarf auf, der insbesondere bei Personenkraftwagen oftmals nur begrenzt zur Verfügung steht.

Getriebekonzepte, welche wesentlich kompakter ausgeführt sind, stellen sogenannte Lastschaltautomatgetriebe mit Planetensätzen dar, die zusätzlich mit einer internen Leistungsverzweigung ausgeführt sein können. Wenngleich diese Getriebe aufgrund ihrer kompakten Bauweise einen relativ geringen Bauraum beanspruchen, so ist bei dieser Getriebeart jedoch nachteilig, daß die Schaltelemente, wie reibschlüssige Kupplungen und reibschlüssige Bremsen, verhältnismäßig groß dimensioniert werden müssen und hydraulisch betätigt werden. Daraus ergeben sich erhebliche Schleppverluste und eine entsprechend große Betätigungsenergie, was sich negativ auf den Wirkungsgrad des Getriebes auswirkt.

Des weiteren sind aus der Praxis Getriebetypen bekannt, welche versuchen, die Vorteile der Vorgelegegetriebe hinsichtlich der kleinen Schaltelemente und die Vorteile der Lastschaltautomatgetriebe mit Planetensätzen hinsichtlich der kompakten Verzahnungen miteinander zu verbinden, indem bei einem Vorgelegegetriebe ein Planetennachschaltsatz vorgesehen wird, wobei dann ein Gruppengetriebe mit rein geometrischer Stufung vorliegt. Problematisch ist hierbei u. a., daß die Stufung bei niedrigeren Gängen sehr gering ist, während sie bei höheren Gängen sehr groß ist, was die Fahrbarkeit für Personenkraftwagen erschwert.

Eine Kombination von Merkmalen der vorbeschriebenen Getriebetypen zeigt ein in der US 5,013,289 beschriebenes Getriebe, welches einen Vorgelegegetriebebereich und zwei Planetensätze aufweist. Zwischen einer Getriebeeingangswelle und einem hierzu nicht koaxial angeordneten Abtrieb sind drei Leistungspfade vorgesehen, in denen mittels einer Lastschaltung die Übersetzung veränderbar ist. Durch die Bereitstellung von drei mit den Planetensätzen verbindbaren Leistungspfaden können sechs Vorwärtsgänge mit verhältnismäßig wenigen Schaltelementen realisiert werden.

Nachteilig ist es hierbei jedoch, daß die Lastschaltung die Verwendung von Lamellenkupplungen mit einem entsprechend großen Aufwand bezüglich der Konstruktion, der hydraulischen Steuerung und der Regelung erfordert und der Bauraumbedarf des Getriebes in Bezug auf die mit dem Getriebe darstellbaren Gänge nicht optimiert ist.

Aus der DE 101 45 519 A1, welche als nächstliegender Stand der Technik angenommen wird, ist außerdem ein automatisiertes Mehrgang-Fahrzeuggetriebe bekannt, bei dem zwischen einer Eingangswelle und einer Ausgangswelle zur Schaltung der Gänge mehrere Leistungspfade vorgesehen sind, welche in einem Planetensatz-Summiergetriebe summiert werden. Dabei ist in wenigstens einem der Leistungspfade die Übersetzung gestuft veränderbar und es wird mindestens eine Übersetzung formschlüssig geschaltet, wobei maximal 6 Vorwärtsgänge realisierbar sind.

Der vorliegenden Erfindung liegt daher die Aufgabe zugrunde, ein Getriebe, insbesondere ein automatisiertes leistungsverzweigtes Mehrganggetriebe, zur Verfügung zu stellen, welches gegenüber dem aufgezeigten Stand der Technik dahingehend verbessert ist, daß es auch bei einer höheren Anzahl an zu schaltenden Gängen konstruktiv kompakt und möglichst einfach mit geringem Bauraumbedarf ausführbar ist sowie durch eine gute Fahrbarkeit gekennzeichnet ist.

Diese Aufgabe wird mit einem Getriebe gemäß den Merkmalen des Patentanspruches 1 gelöst.

Mit dem Getriebe nach der Erfindung, welches vorzugsweise in Vorgelegebauweise und mit Leistungsverzweigung sowie mit mindestens drei mit jeweils wenigstens einem Schaltelement und jeweils wenigstens einer Teilübersetzung ausgebildeten Leistungszweigen und dem Planetenradsatz ausgebildet ist, ist eine leichte und angenehme Schaltbarkeit eines Getriebe einstellbar, da ein derartiges Getriebe, insbesondere mit den kennzeichnenden Merkmalen des Patentanspruchs 1, mit der dafür erforderlichen Getriebestufung ausführbar ist.

Des weiteren ergibt sich aus der erfindungsgemäßen Kombination mit den jeweils in einem Leistungszweig angeordneten Teilübersetzungen und dem Planetensatz vorteilhafterweise die Möglichkeit, das Mehrganggetriebe mit möglichst vielen Gangstufen auszuführen, die wiederum mit möglichst wenigen Getriebebauteilen realisiert werden.

Dies führt vorteilhafterweise dazu, daß das Getriebe nach der Erfindung im Vergleich zu herkömmlich ausgestalteten Mehrganggetrieben kleinere äußere Abmessungen aufweist und durch ein geringeres Gesamtgewicht gekennzeichnet ist, weshalb sich bei der Verwendung des Mehrganggetriebes in einem Kraftfahrzeug vorteilhafterweise eine Kraftstoffersparnis ergibt.

Darüber hinaus ist von Vorteil, daß bei Einfachschaltungen in dem Mehrganggetriebe im wesentlichen jeweils immer nur ein abgeschaltetes Schaltelement zugeschaltet wird und ein zugeschaltetes Schaltelement aus dem Leistungsfluß des Getriebes nach der Erfindung abgeschaltet wird, wodurch schaltqualitätskritische Gruppenschaltungen, bei denen mehrere Schaltelemente eines Getriebes gleichzeitig betätigt werden müssen, nahezu gänzlich vermieden werden.

Zusätzlich weist das Getriebe nach der Erfindung gegenüber den aus dem Stand der Technik bekannten Getrieben den Vorteil auf, daß mit dem Getriebe wenigstens ein Gang bzw. eine Gesamtübersetzung darstellbar ist, bei der das Antriebsmoment direkt durch das Getriebe, d. h. ohne Verluste in den Verzahnungen des Getriebes, führbar ist.

Dies wird dadurch erreicht, dass gemäß Patentanspruch 1 zwischen zwei Wellen des Planetenradsatzes ein zusätzliches Schaltelement angeordnet ist, das in geschlossenem Zustand ein Verblocken des Planetenradsatzes bewirkt.

Darüber hinaus wird mit der erfindungsgemäßen Anordnung des zusätzlichen Schaltelementes sowie mit der erfindungsgemäßen Anordnung der anderen Schaltelemente nach Patentanspruch 1 erreicht, daß im Vergleich zu aus dem Stand der Technik bekannten Getrieben mehr Gangstufen ohne zusätzliche Zahnradstufen darstellbar sind, so daß eine Anzahl der möglichen schaltbaren Gangstufen, vorzugsweise 8 oder 9 Gangstufen, in Bezug auf den Bauraumbedarf des Getriebes gemäß der Erfindung optimiert ist.

Weitere Vorteile und vorteilhafte Ausgestaltungen eines erfindungsgemäßen Getriebes sind der Beschreibung, der Zeichnung und den Patentansprüchen entnehmbar.

Ein Ausführungsbeispiel eines Getriebes gemäß der Erfindung ist in der Zeichnung schematisch vereinfacht dargestellt und wird in der nachfolgenden Beschreibung näher erläutert.

Es zeigt:
- Fig.1: ein Prinzipschema eines erfindungsgemäßen Ge- triebes;
- Fig.2: ein Räderschema des in Fig. 1 prinzipmäßig dargestellten Getriebes;
- Fig.3: ein Schaltschema und eine Übersetzungsreihe für ein als 8-Gang-Getriebe ausgeführtes Ge- triebe gemäß der Erfindung und
- Fig.4: ein Schaltschema und eine Übersetzungsreihe für ein als 9-Gang-Getriebe ausgeführtes Ge- triebe gemäß der Erfindung.

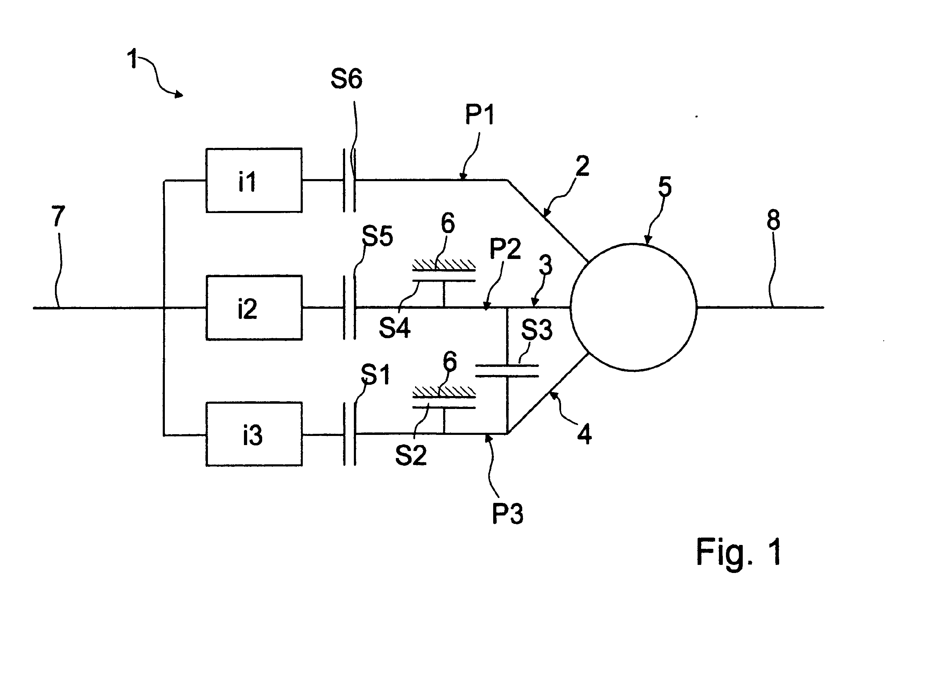

Bezug nehmend auf Fig. 1 ist ein Prinzipschema eines als automatisiertes, leistungsverzweigtes Mehrganggetriebe ausgeführten Getriebes 1 dargestellt, welches drei Leistungszweige P1, P2 und P3 aufweist. Die Leistungszweige P1 bis P3 sind jeweils mit einer Welle 2, 3, 4 eines Planetenradsatzes 5 verbunden. Des weiteren ist jeder der Leistungszweige P1 bis P3 jeweils mit einer Teilübersetzung i1, i2 und i3 sowie jeweils mit einem Schaltelement S6, S5 und S1 ausgeführt. Über die Schaltelemente S6, S5 und S1 sind jeweils die Leistungszweige P1 bis P3 in einen Leistungsfluß des Getriebes 1 zuschaltbar.

Zusätzlich sind die beiden Wellen 3 und 4 des Planetenradsatzes 5 jeweils über ein Schaltelement S4 und S2 gegenüber einem Gehäuse 6 des Getriebes 1 abstützbar bzw. nicht drehbar in dem Gehäuse 6 des Getriebes 1 festlegbar.

Darüber hinaus ist zwischen den beiden Wellen 3 und 4 des Planetenradsatzes 5 ein Schaltelement S3 angeordnet, welches in geschlossenem Zustand ein Verblocken des Planetenradsatzes 5 bewirkt, so daß ein über eine Getriebeeingangswelle 7 anstehendes Antriebsmoment bei geschlossenem Schaltelement S2 und bei geschlossenem Schaltelement S3 direkt mit einer Gesamtübersetzung i_ges = 1 auf eine Getriebeausgangswelle 8 führbar ist.

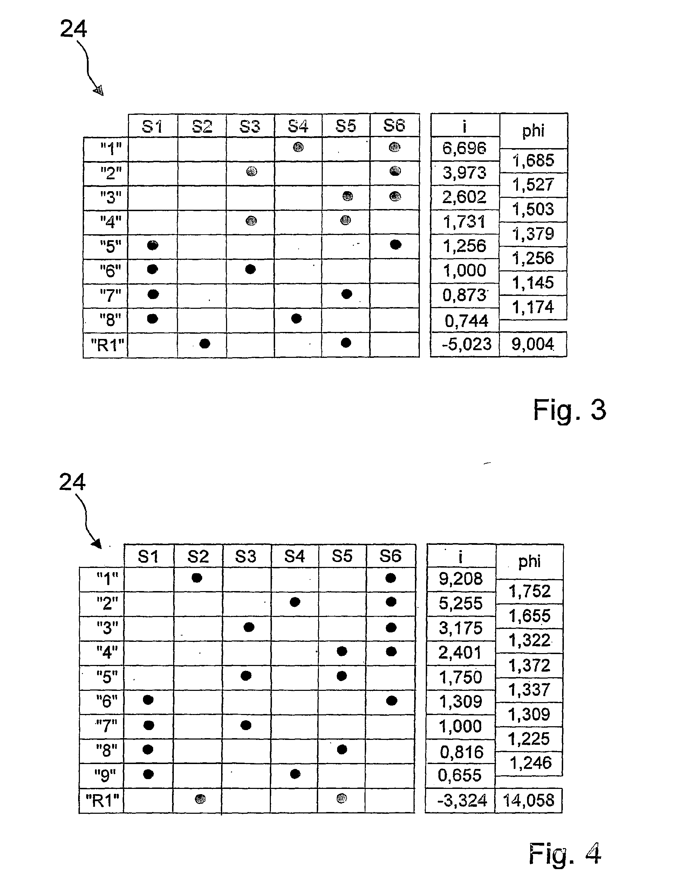

Mit den drei vorgegebenen Übersetzungen i1, i2 und i3 und den Schaltelementen S1 bis S6 können vorzugsweise wie in den Schaltschemata 24 gemäß Fig. 3 und Fig. 4 dargestellt acht oder neun Gangstufen für Vorwärtsfahrt, welche aus Gründen einer komfortableren Fahrbarkeit progressiv gestuft sind, geschaltet werden. Ein Rückwärtsgang kann entweder durch eine zusätzliche Stirnradstufe mit integrierter Drehzahlumkehr oder durch eine über eine geeignete Schaltung der Schaltelemente S1 bis S6 erzwungene Drehzahlumkehr im Planetenradsatz 5 verwirklicht werden.

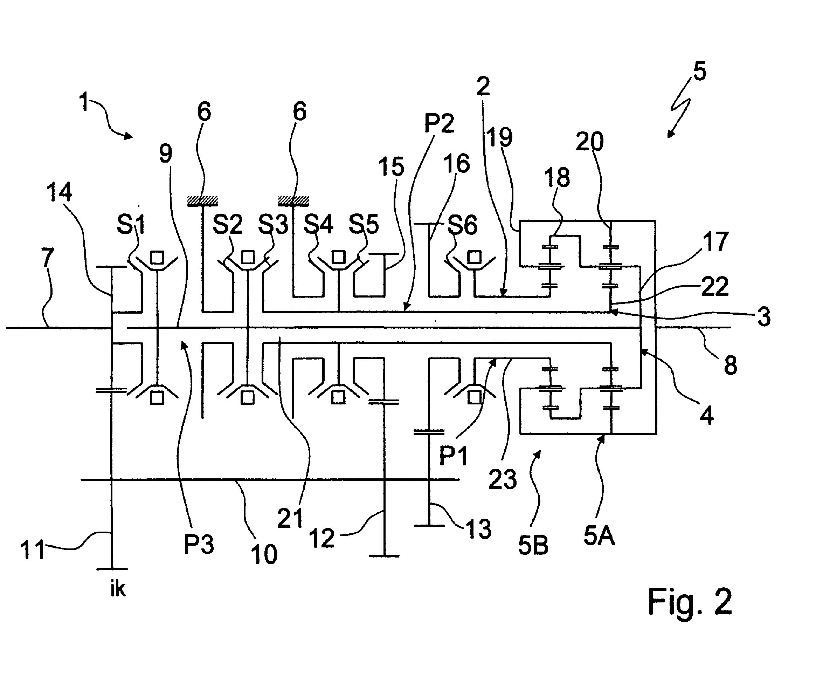

In Fig. 2 ist ein Räderschema des Getriebes 1 dargestellt, wobei das Getriebe 1 ein als Vorgelegegetriebe ausgeführtes Teilgetriebe und den als Summiergetriebe ausgeführten und dem Vorgelegegetriebebereich nachgeschalteten Planetenradsatz 5 umfaßt. Das Getriebe 1 ist im Bereich seines Vorgelegegetriebes mit einer Hauptwelle 9 ausgeführt, zu der parallel eine Vorgelegewelle 10 angeordnet ist, auf der drei Stirnräder 11, 12, 13 angeordnet sind, welche jeweils mit Stirnrädern 14, 15 und 16 kämmen.

Das Stirnrad 14 ist mit der Getriebeeingangswelle 7 drehfest verbunden und treibt während des Betriebs des Getriebes 1 die Vorgelegewelle 10 permanent an. Des weiteren ist die Getriebeeingangswelle 7 in geschlossenem Zustand des Schaltelementes S1 mit der Hauptwelle 9 des Getriebes 1 verbunden.

Der Planetenradsatz 5 ist vorliegend als ein 4-Wellen-Planetensatz ausgeführt, der aus zwei Minusplanetensätzen 5A und 5B gebildet ist. Ein Steg 17 des ersten Minusplanetensatzes 5A ist mit einem Hohlrad 18 des zweiten Minusplanetensatzes 5B verbunden. Ein Steg 19 des zweiten Minusplanetensatzes 5B ist mit einem Hohlrad 20 des ersten Minusplanetensatzes 5A und der Getriebeausgangswelle 8 verbunden.

Alternativ zu der letztgenannten Ausführung des Planetenradsatzes kann es bei einer weiteren Ausführung des Getriebes nach der Erfindung auch vorgesehen sein, daß der Planetenradsatz aus zwei anderen Planetensätzen kombiniert ist. Dabei kann der Planetenradsatz beispielsweise als ein Ravigneaux-Planetensatz ausgeführt sein.

Die Hauptwelle 9, welche mit dem Steg 17 des ersten Minusplanetensatzes 5A verbunden ist, ist in geschlossenem Zustand des Schaltelementes S2 mit dem Gehäuse 6 des Getriebes 1 derart verbunden, daß die Hauptwelle 9 und damit auch der Steg bzw. der Planetenträger 17 des ersten Minusplanetensatzes 5A drehfest in dem Gehäuse 6 angeordnet sind.

Im geschlossenen Zustand des Schaltelementes S3 ist die Hauptwelle 9 über eine Hohlwelle 21 mit einem Sonnenrad 22 des ersten Minusplanetensatzes 5A verbunden, so daß das Sonnenrad 22 und der Steg 17 des ersten Minusplanetensatzes 5A nicht drehbar miteinander verbunden sind und der Planetenradsatz 5 verblockt ist und als starre Einheit umläuft.

In geschlossenem Zustand des Schaltelementes S4 ist die Hohlwelle 21 und damit das Sonnenrad 22 des ersten Minusplanetensatzes 5A fest mit dem Gehäuse 6 verbunden, wobei bei geschlossenem Schaltelement S5 die Übersetzung, welche durch die miteinander kämmenden Stirnräder 12 und 15 gebildet wird, in den Leistungsfluß des Getriebes 1 zugeschaltet ist.

Über das Schaltelement S6 wird eine weitere Stirnradstufe, welche durch die miteinander in Eingriff stehenden Stirnrädern 13 und 16 gebildet ist, in den Leistungsfluß des Getriebes 1 zugeschaltet. D. h., daß in geschlossenem Zustand des Schaltelementes S6 das über die Vorgelegewelle 10 anstehende Antriebsmoment auf ein Sonnenrad 23 des zweiten Minusplanetensatzes 5B weitergeleitet wird.

Bei entsprechender Ansteuerung der Schaltelemente S1 bis S6 wird ein Getriebeeingangsmoment auf einem der Leistungszweige P1, P2 oder P3 oder bei eingestellter Leistungsverzweigung gleichzeitig über zwei der drei Leistungszweige P1 bis P3 geführt. Jeder der Leistungszweige P1 bis P3 wird mit Hilfe des ihm zugeordneten Schaltelementes S6, S5 oder S1 mit seiner Teilübersetzung i1, i2 oder i3 in einen Leistungsfluß des Getriebes 1 bedarfsweise zugeschaltet bzw. aus diesem abgeschaltet.

Die vorliegend jeweils mit einer Teilübersetzung ausgeführten Leistungspfade P1 bis P3 können in einer Weiterbildung der Erfindung auch mit Teilgetrieben ausgeführt sein, die jeweils mehr als eine Teilübersetzung aufweisen.

Mit der vorbeschriebenen erfindungsgemäßen Ausführung des Getriebes sind in Kombination mit der nachfolgend beschriebenen Schaltlogik viele Gangstufen bzw. Gesamtübersetzungen des Getriebes 1 bei einer gleichzeitig geringen Anzahl an Übersetzungsstufen einstellbar, so daß ein sehr bauraumgünstiges Getriebekonzept gegeben ist.

In Fig. 3 und Fig. 4 sind Schaltschemata 24 dargestellt, die jeweils einen Zusammenhang zwischen den einzelnen Gangstufen für Vorwärtsfahrt "1° bis "8" bzw. "1" bis "9" und einem Rückwärtsgang "R1" des Getriebes 1 gemäß Fig. 1 und den Schaltzuständen der Schaltelemente S1 bis S6 wiedergeben.

Die Schaltschemata 24 sind in Form einer Tabelle aufgebaut, in deren Kopfspalte die einzelnen Gangstufen "1° bis "8" bzw. "1" bis "9" und "R1" des Getriebes 1 aufgeführt sind. In der Kopfzeile der Schaltschemata 24 sind die einzelnen Schaltelemente S1 bis S6, eine Gesamtübersetzung i_ges des Getriebes 1 und ein Stufensprung phi, der jeweils aus einem Quotient aus den Werten zweier aufeinanderfolgender Gesamtübersetzungen gebildet ist, aufgeführt.

Aus dem Schaltschema 24 gemäß Fig. 3 geht in Verbindung mit dem in Fig. 1 dargestellten Prinzipschema des Getriebes 1 beispielsweise hervor, daß zur Einstellung der ersten Gangstufe "1" bzw. der ersten Gesamtübersetzung i_ges des Getriebes 1 die Schaltelemente S4 und S6 geschlossen bzw. zugeschaltet sind. In diesem Betriebszustand des Getriebes wird ein Antriebsmoment von der Getriebeeingangswelle 7 über die Stirnräder 14 und 11 auf die Vorgelegewelle 10 und die Stirnräder 13 und 16 auf das Sonnenrad 23 des zweiten Minusplanetensatzes 5B geführt. Anschließend wird es auf die Getriebeausgangswelle 8 weitergeleitet.

In diesem Schaltzustand des Getriebes 1 wird das Antriebsmoment der Getriebeeingangswelle 7 über den in Fig. 1 dargestellten Leistungszweig P1 auf den Planetenradsatz 5 aufgegeben, da der Leistungszweig P1 über das geschlossene Schaltelement S6 in den Leistungspfad des Getriebes 1 zugeschaltet ist. Gleichzeitig ist die Welle 3, welche in Fig. 2 das Sonnenrad 23 des zweiten Minusplanetensatzes 5B ist, drehfest mit dem Gehäuse 6 verbunden.

Die Teilübersetzung i1 des Leistungszweiges P1 wird vorliegend durch die miteinander kämmenden Stirnräder 14 und 11 mit einer Teilübersetzung ik und einer Übersetzung der Stirnräder 16 und 13 gebildet. Die eingestellte Gesamtübersetzung i_ges in der ersten Gangstufe "1" des Getriebes 1 weist aufgrund des über das geschlossene Schaltelement S4 drehfest gehaltenen Sonnenrads 23 des zweiten Minusplanetensatzes 5B und der sich einstellenden Übersetzung in dem Planetenradsatz 5 den Wert 6,696 auf.

Bei einer Hochschaltung, ausgehend von der ersten Gangstufe "1" in die zweite Gangstufe "2" des Getriebes 1, bleibt das Schaltelement S6 geschlossen und das Schaltelement S3 wird zugeschaltet, wobei gleichzeitig das Schaltelement S4 abgeschaltet bzw. geöffnet wird. Die Zuschaltung des Schaltelementes S3 bewirkt, daß der Planetenradsatz 5 gesperrt bzw. verblockt wird, daß die Elemente des Planetenradsatzes nicht mehr gegeneinander drehbar sind und der Planetenradsatz 5 als bauliche Einheit bis auf die Lagerverluste nahezu verlustfrei im Gehäuse 6 umläuft.

In geschlossenem Zustand des Schaltelementes S3 ist die Welle 3 und die Welle 4 des Getriebes 1, welche in Fig. 2 das mit der Hohlwelle 21 verbundene Sonnenrad 22 des ersten Minusplanetensatzes 5A und der mit der Hauptwelle 9 verbundene Planetenträger 17 des zweiten Minusplanetensatzes 5B sind, miteinander verbunden. Das Antriebsmoment der Getriebeeingangswelle 7 wird bei geöffnetem Schaltelement S1 über die Stirnräder 14 und 11 mit der Übersetzung ik auf die Vorgelegewelle 10 geführt und aufgrund des geschlossenen Schaltelementes S6 über die Stirnräder 13 und 16 und den verblockten Planetenradsatz 5 direkt auf die Getriebeausgangswelle 8 geführt.

Die Teilübersetzung i1 des zugeschalteten Leistungszweiges P1 wird wiederum aus der Übersetzung ik und der Übersetzung zwischen den Stirnrädern 13 und 16 gebildet, wobei sich aufgrund des gesperrten Planetenradsatzes 5 eine Gesamtübersetzung i_ges von 3,973 einstellt. Damit ergibt sich zwischen der ersten Gangstufe "1" und der zweiten Gangstufe "2" des Getriebes 1 ein Stufensprung phi von 1,685.

Zur Einstellung des Rückwärtsganges "R1" wird wie in den Schaltschemata 24 gemäß Fig. 3 und Fig. 4 jeweils das Schaltelement S2 und das Schaltelement S5 gleichzeitig geschlossen, wodurch einerseits das Antriebsmoment über den Leistungszweig P2 in Richtung der Getriebeausgangswelle 8 durch das Getriebe 1 geführt wird und andererseits im Planetenradsatz 5 eine Drehrichtungsumkehr zur Darstellung des Rückwärtsganges "R1" erreicht wird.

Bei einer Hochschaltung, ausgehend von der zweiten Gangstufe "2" in die dritte Gangstufe "3" des Getriebes 1, bleibt das Schaltelement S6 wiederum geschlossen und das Schaltelement S5 wird in den Leistungsfluß des Getriebes 1 zugeschaltet. Gleichzeitig wird das Schaltelement S3 abgeschaltet. Damit wird das Antriebsmoment der Getriebeeingangswelle 7 über die beiden Leistungszweige P1 und P2 mit deren Teilübersetzungen i1 und i2 leistungsverzweigt durch das Getriebe 1 geführt, wobei das aufgeteilte Antriebsmoment im Planetenradsatz 5 aufsummiert wird und anschließend auf die Getriebeausgangswelle 8 weitergeleitet wird.

In diesem Betriebszustand des Getriebes 1 wird das Getriebeeingangsmoment über die Stirnräder 14 und 11 mit der Übersetzung ik auf die Vorgelegewelle und von dort aus über die Stirnräder 12 und 15 und deren Übersetzung auf das Sonnenrad 22 des ersten Minusplanetensatzes 5A geführt. Gleichzeitig wird ein Teil des Antriebsmomentes von der Vorgelegewelle 10 über die Stirnräder 13 und 16 und deren Übersetzung auf das Sonnenrad 23 des zweiten Minusplanetensatzes 5B geführt. Im Planetenradsatz 5 werden die beiden Teile des Antriebsmomentes aufsummiert und auf die Getriebeausgangswelle 8 aufgegeben.

Die Teilübersetzung i2 des Leistungszweiges P2 setzt sich damit aus der Übersetzung ik und der Übersetzung, welche sich aus dem Verhältnis der Zähnezahlen der Stirnräder 12 und 15 ergibt, zusammen. Die Teilübersetzung i1 des Leistungszweiges P1 setzt sich aus der Übersetzung ik und der Übersetzung zwischen den Stirnrädern 14 und 11 zusammen. In diesem Schaltzustand des Getriebes 1 ergibt sich eine Gesamtübersetzung i_ges der Gangstufe "3" von 2,602. Der Stufensprung phi zwischen der zweiten Gangstufe "2" und der dritten Gangstufe "3" ist dabei 1,527.

Bei einer weiteren Hochschaltung von der dritten Gangstufe "3" in die vierte Gangstufe "4" wird das Schaltelement S6 abgeschaltet und das Schaltelement S3 geschlossen, so daß das Getriebeeingangsmoment über den Leistungszweig P2 und den verblockten Planetenradsatz 5 auf die Getriebeausgangswelle 8 geführt wird, so daß einerseits keine Leistungsverzweigung im Getriebe 1 vorliegt und eine Verlustleistung im Planetenradsatz 5 aufgrund des direkten Durchtriebes des Getriebeeingangsmomentes mit der Teilübersetzung i2, welche dann auch gleichzeitig die Gesamtübersetzung i_ges darstellt, vermieden wird.

Ist die fünfte Gangstufe "5" in dem Getriebe 1 eingelegt, dann ist das Schaltelement S1 sowie das Schaltelement S6 geschlossen, so daß das Getriebeeingangsmoment über die Leistungspfade P1 und P3 über eine Leistungsverzweigung durch das Getriebe 1 geführt wird und im Planetenradsatz 6, der dann nicht verblockt ist, aufsummiert auf die Getriebeausgangswelle 8 geführt wird.

Um die sechste Gangstufe "6" in dem Getriebe 1 darzustellen, ist das Schaltelement S1 und gleichzeitig das Schaltelement S3 geschlossen, so daß ein Getriebeeingangsmoment der Getriebeeingangswelle 7 mittels des Schaltelementes S1 über den Leistungszweig P3 auf die Welle 4 des Planetenradsatzes 5 geführt wird. Das geschlossene Schaltelement S3 führt wiederum dazu, daß der Planetenradsatz 5 verblockt ist und das Getriebeeingangsmoment von der Getriebeeingangswelle 7 direkt, d. h. mit einer Gesamtübersetzung i_ges gleich 1,0, und nahezu verlustfrei durch das Getriebe 1 auf die Getriebeausgangswelle 8 geführt wird. Daraus folgt, daß die Teilübersetzung i3 des Leistungszweiges P3 vorliegend den Wert 1 aufweist.

Die vorbeschriebene Schaltlogik und die damit verbundene wechselweise Führung des Antriebsmomentes über jeweils einen oder gleichzeitig über zwei der drei Leistungszweige mit den verschiedenen Teilübersetzungen in Kombination mit dem zusätzlichen Schaltelement zum Verblocken des Planetenradsatzes 5 führt im Vergleich zu aus dem Stand der Technik bekannten Getrieben dazu, daß die gleiche Anzahl an Gangstufen mit weniger Radebenen darstellbar ist. Somit weist das Getriebe gemäß der Erfindung bei gleicher Leistungsfähigkeit wesentlich kleinere äußere Abmessungen, ein damit einhergehend geringeres Gesamtgewicht und darüber hinaus wesentlich niedrigere Herstellkosten auf.

Des weiteren ist das Getriebe nach der Erfindung aufgrund der Leistungsverzweigung gegenüber aus dem Stand der Technik bekannten Getrieben in Standardbauweise durch einen besseren Wirkungsgrad gekennzeichnet, da das Antriebsmoment bei mehreren Gangstufen des Getriebes direkt durch das Getriebe, d. h. mit verblocktem Planetenradsatz 5, auf die Getriebeausgangswelle 8 übertragen wird.

Des weiteren bietet die progressive Stufung der einzelnen Gesamtübersetzungen des Getriebes 1 eine bessere Möglichkeit der Anpassung des Zugkraftangebotes an den Zugkraftbedarf als dies bei geometrisch gestuften Getrieben der Fall ist, da herkömmliche Gruppengetriebe in der Regel aufgrund ihres geometrisch gestuften Aufbaus gleich große Gangsprünge aufweisen.

Die Schaltelemente S1 bis S6 des Getriebes 1 sind vorliegend als an sich bekannte Synchronisierungen ausgeführt, die zum Ausgleich von Differenzdrehzahlen im Getriebe mit einer reibschlüssigen Kupplungs- bzw. Bremskomponente ausgeführt sind. Nach dem Synchronisiervorgang werden die miteinander drehfest zu verbindenden Bauteile der Leistungszweige bzw. des Getriebes 1 über eine formschlüssige Kupplungs- bzw. Bremskomponente der Schaltelemente S1 bis S6 formschlüssig gekoppelt.

Alternativ hierzu kann es bei einer weiteren vorteilhaften Ausführungsform des Getriebes nach der Erfindung selbstverständlich auch vorgesehen sein, daß die Schaltelemente S1 bis S6 als reibschlüssige Schaltelemente, wie beispielsweise Lamellenkupplungen oder Lamellenbremsen, ausgeführt sind, wobei das Getriebe 1 dann als Lastschaltgetriebe ausgeführt ist, mit dem Hoch- und Rückschaltungen unter Last, d. h. ohne Zugkraftunterbrechung, ausgeführt werden können.

Die Schaltelemente können vor oder nach der jeweiligen Übersetzungsstufe, die vorliegend als Stirnradstufen ausgeführt sind und die über die Schaltelemente zu- bzw. abgeschaltet werden, angeordnet werden. Je näher die Schaltelemente an den zuzuschaltenden Übersetzungsstufen positioniert sind, desto kleiner sind die jeweils über die Schaltelemente zu synchronisierenden Drehmassen der an einer Schaltung beteiligten Getriebebauteile.

Zusätzlich kann es bei einer weiteren vorteilhaften Weiterbildung des Getriebes nach der Erfindung vorgesehen sein, daß in einem Antriebsstrang eines Fahrzeugs bzw. eines Kraftfahrzeugs ein Anfahrelement vorgesehen ist, wobei das Anfahrelement eines der als Lastschaltelemente ausgeführten Schaltelemente des Getriebes oder ein separates Bauteil, wie beispielsweise ein hydrodynamischer Drehmomentwandler, eine Trockenkupplung oder ein mit einer beliebigen Welle des Mehrganggetriebes wirkverbundener Elektromotor sein kann.

Insbesondere bei der separaten Ausführung des Anfahrelementes als Elektromotor wird ein zum Anfahren benötigtes Antriebsmoment entweder von dem Elektromotor erzeugt, oder ein von einer Antriebsmaschine anstehendes Antriebsmoment wird von dem Elektromotor derart abgestützt, daß am Abtrieb eines Fahrzeugs das zum Anfahren erforderliche Antriebsmoment anliegt.

Sind die drei Leistungspfade P1 bis P3 anstatt mit den Teilübersetzungen i1 bis i3 jeweils mit drei Teilgetrieben ausgeführt, die mehrere Teilgetriebeübersetzungen aufweisen und die in jedem der Leistungszweige P1 bis P3 darstellbar sind, ist die Anzahl der mit dem Getriebe 1 darstellbaren Gangstufen stark erweiterbar. Dabei können die Teilgetriebeübersetzungen in den einzelnen Teilgetrieben vor Zuschalten des jeweiligen Leistungszweiges lastfrei vorbereitet und eingelegt werden, so daß die Einstellung der verschiedenen Teilgetriebeübersetzungen in den Teilgetrieben mit kosten- und bauraumgünstigen formschlüssigen Schaltelementen durchführbar ist.

Die Zuschaltung der Leistungszweige in den Leistungsfluß des erfindungsgemäßen Getriebes ist unabhängig davon vorteilhafterweise über lastschaltfähige reibschlüssige Schaltelemente, wie beispielsweise Lamellenkupplungen, unter Last ohne Zugkraftunterbrechung durchführbar.

Alternativ zu der in Fig. 2 dargestellten Ausführungsform des Getriebes nach der Erfindung kann der Vorgelegegetriebebereich des Getriebe mit mindestens zwei gleichen parallele zu der Hauptwelle im Gehäuse angeordneten Vorgelegewellen ausgeführt sein, wodurch das Getriebe nochmals kleiner, leichter und kostengünstiger gestaltet werden kann.

### Bezugszeichen

- 1: Getriebe
- 2-4: Wellen des Planetenradsatzes
- 5: Planetenradsatz
- 5A: erster Minusplanetensatz
- 5B: zweiter Minusplanetensatz
- 6: Gehäuse des Getriebes
- 7: Getriebeeingangswelle
- 8: Getriebeausgangswelle
- 9: Hauptwelle
- 10: Vorgelegewelle
- 11-16: Stirnräder
- 17: Steg des ersten Minusplanetensatzes
- 18: Hohlrad des zweiten Minusplanetensatzes
- 19: Steg des zweiten Minusplanetensatzes
- 20: Hohlrad des ersten Minusplanetensatzes
- 21: Hohlwelle
- 22: Sonnenrad des ersten Minusplanetensatzes
- 23: Sonnenrad des zweiten Minusplanetensatzes
- 24: Schaltschema

- P1-P3: Leistungszweig
- i1, i2,:
- i3, ik: Teilübersetzung
- S1-S6: Schaltelement

## Patentansprüche

1. Getriebe (1), insbesondere automatisiertes leistungsverzweigtes Mehrganggetriebe, mit wenigstens drei Leistungszweigen (P1, P2, P3), die jeweils mit einer Welle (2, 3, 4) eines nachgeschalteten Planetenradsatzes (5) verbunden sind und jeweils mit wenigstens einer Teilübersetzung (i1, i2, i3) ausgeführt sind, wobei jeder der Leistungszweige (P1, P2, P3) mit einem Schaltelement (S1, S5, S6) zum Zuschalten der Leistungszweige (P1 bis P3) mit einer Teilübersetzung (i1, i2, i3) in einen Leistungsfluß ausgeführt ist und mindestens eine der Wellen (3, 4) des Planetenradsatzes (5) mit einem weiteren Schaltelement (S2, S4) in Wirkverbindung steht, über die die Welle (3, 4) gegenüber einem Gehäuse (6) abstützbar ist und zwischen zwei Wellen (3, 4) des Planetenradsatzes (5) ein zusätzliches Schaltelement (S3) angeordnet ist, das in geschlossenem Zustand ein Verblocken des Planetenradsatzes (5) bewirkt, wobei
- ein erstes Schaltelement (S1) in dem dritten Leistungszweig (P3),
- ein fünftes Schaltelement (S5) in dem zweiten Leistungszweig (P2) und
- ein sechstes Schaltelement (S6) in dem ersten Leistungszweig (P1) angeordnet ist und
- eine erste Welle (4) des Planetenradsatzes (5) mittels eines zweiten Schaltelements (S2) am Gehäuse (6) abstüzbar ist
**dadurch gekennzeichnet, dass**
- eine zweite Welle (3) des Planetenradsatzes (5) mittels eines vierten Schaltelements (S4) am Gehäuse (6) abstützbar ist und
- zwischen den beiden Wellen (3, 4) des Planetenradsatzes (5) ein drittes Schaltelement (S3) vorgesehen ist.

2. Getriebe nach Anspruch 1, **dadurch gekennzeichnet, dass** das Getriebe (1) acht Vorwärtsgänge aufweist und zum Schalten des
- ersten Vorwärtsgangs das vierte und sechste Schaltelement (S4, S6),
- zweiten Vorwärtsgangs das dritte und sechste Schaltelement (S3, S6),
- dritten Vorwärtsgangs das fünfte und sechste Schaltelement (S5, S6),
- vierten Vorwärtsgangs das dritte und fünfte Schaltelement (S3, S5),
- fünften Vorwärtsgangs das erste und sechste Schaltelement (S1, S6),
- sechsten Vorwärtsgangs das erste und dritte Schaltelement (S1, S3),
- siebten Vorwärtsgangs das erste und fünfte Schaltelement (S1, S5) und
- achten Vorwärtsgangs das erste und vierte Schaltelement (S1, S4) geschlossen wird.

3. Getriebe nach Anspruch 1, **dadurch gekennzeichnet, dass** das Getriebe (1) neun Vorwärtsgänge aufweist und zum Schalten des
- ersten Vorwärtsgangs das zweite und sechste Schaltelement (S2, S6),
- zweiten Vorwärtsgangs das vierte und sechste Schaltelement (S4, S6),
- dritten Vorwärtsgangs das dritte und sechste Schaltelement (S3, S6),
- vierten Vorwärtsgangs das fünfte und sechste Schaltelement (S5, S6),
- fünften Vorwärtsgangs das dritte und fünfte Schaltelement (S3, S5),
- sechsten Vorwärtsgangs das erste und sechste Schaltelement (S1, S6),
- siebten Vorwärtsgangs das erste und dritte Schaltelement (S1, S3),
- achten Vorwärtsgangs das erste und fünfte Schaltelement (S1, S5) und
- neunten Vorwärtsgangs das erste und vierte Schaltelement (S1, S4), geschlossen wird.

4. Getriebe nach einem der vorangehenden Ansprüche, **dadurch gekennzeichnet, dass** zum Schalten eines Rückwärtsgangs das zweite und fünfte Schaltelement (S2, S5) geschlossen wird.

## Claims

1. Gearbox (1), in particular automatic power-split multi-gear gearbox, having at least three power branches (P1, P2, P3) which are connected in each case to a shaft (2, 3, 4) of a downstream planetary gear set (5) and which are formed in each case with at least one component transmission ratio (i1, i2, i3), with each of the power branches (P1, P2, P3) being formed with a shift element (S1, S5, S6) for connecting the power branches (P1 to P3) with a component transmission ratio (i1, i2, i3) into a power flow, and at least one of the shafts (3, 4) of the planetary gear set (5) being operatively connected to a further shift element (S2, S4) via which the shaft (3, 4) can be supported with respect to a housing (6), and an additional shift element (S3) being arranged between two shafts (3, 4) of the planetary gear set (5), which additional shift element (S3), when it is closed, places the planetary gear set (5) in a blocked state, wherein
- a first shift element (S1) is arranged in the third power branch (P3),
- a fifth shift element (S5) is arranged in the second power branch (P2) and
- a sixth shift element (S6) is arranged in the first power branch (P1) and
- a first shaft (4) of the planetary gear set (5) can be supported on the housing (6) via a second shift element (S2),
- a second shaft (3) of the planetary gear set (5) can be supported on the housing (6) via a fourth shift element (S4), and
- a third shift element (S3) is provided between the two shafts (3, 4) of the planetary gear set (5).

2. Gearbox according to Claim 1, **characterized in that** the gearbox (1) has eight forward gears, and
- to engage the first forward gear, the fourth and sixth shift elements (S4, S6) are closed,
- to engage the second forward gear, the third and sixth shift elements (S3, S6) are closed,
- to engage the third forward gear, the fifth and sixth shift elements (S5, S6) are closed,
- to engage the fourth forward gear, the third and fifth shift elements (S3, S5) are closed,
- to engage the fifth forward gear, the first and sixth shift elements (S1, S6) are closed,
- to engage the sixth forward gear, the first and third shift elements (S1, S3) are closed,
- to engage the seventh forward gear, the first and fifth shift elements (S1, S5) are closed, and
- to engage the eighth forward gear, the first and fourth shift elements (S1, S4) are closed.

3. Gearbox according to Claim 1, **characterized in that** the gearbox (1) has nine forward gears, and
- to engage the first forward gear, the second and sixth shift elements (S2, S6) are closed,
- to engage the second forward gear, the fourth and sixth shift elements (S4, S6) are closed,
- to engage the third forward gear, the third and sixth shift elements (S3, S6) are closed,
- to engage the fourth forward gear, the fifth and sixth shift elements (S5, S6) are closed,
- to engage the fifth forward gear, the third and fifth shift elements (S3, S5) are closed,
- to engage the sixth forward gear, the first and sixth shift elements (S1, S6) are closed,
- to engage the seventh forward gear, the first and third shift elements (S1, S3) are closed,
- to engage the eighth forward gear, the first and fifth shift elements (S1, S5) are closed, and
- to engage the ninth forward gear, the first and fourth shift elements (S1, S4) are closed.

4. Gearbox according to one of the preceding claims, **characterized in that**, to engage a reverse gear, the second and fifth shift elements (S2, S5) are closed.

## Revendications

1. Transmission (1), en particulier transmission à plusieurs vitesses automatisée à dérivation de puissance, comprenant au moins trois voies de puissance (P1, P2, P3), qui sont connectées à chaque fois à un arbre (2, 3, 4) d'un train planétaire (5) monté en aval, et qui sont réalisées à chaque fois avec au moins une multiplication partielle (i1, i2, i3), chacune des voies de puissance (P1, P2, P3) étant réalisée avec un élément de commutation (S1, S5, S6) pour relier les voies de puissance (P1 à P3) avec une multiplication partielle (i1, i2, i3) dans un flux de puissance et au moins l'un des arbres (3, 4) du train planétaire (5) étant en liaison fonctionnelle avec un autre élément de commutation (S2, S4), laquelle liaison permettant à l'arbre (3, 4) d'être supporté par rapport à un boîtier (6) et un élément de commutation supplémentaire (S3) étant disposé entre deux arbres (3, 4) du train planétaire (5), lequel élément de commutation supplémentaire dans l'état fermé provoque un blocage du train planétaire (5),
- un premier élément de commutation (S1) étant disposé dans la troisième voie de puissance (P3),
- un cinquième élément de commutation (S5) étant disposé dans la deuxième voie de puissance (P2), et
- un sixième élément de commutation (S6) étant disposé dans la première voie de puissance (P1), et
- un premier arbre (4) du train planétaire (5) pouvant être supporté sur le boîtier (6) au moyen d'un deuxième élément de commutation (S2),
**caractérisée en ce que**
- un deuxième arbre (3) du train planétaire (5) peut être supporté au moyen d'un quatrième élément de commutation (S4) sur le boîtier (6) et
- un troisième élément de commutation (S3) est prévu entre les deux arbres (3, 4) du train planétaire (5).

2. Transmission selon la revendication 1, **caractérisée en ce que** la transmission (1) présente huit vitesses de marche avant et, les éléments de commutation suivants étant fermés pour la commutation des vitesses suivantes :
- pour la première vitesse de marche avant, le quatrième et le sixième élément de commutation (S4, S6),
- pour la deuxième vitesse de marche avant, le troisième et le sixième élément de commutation (S3, S6),
- pour la troisième vitesse de marche avant, le cinquième et le sixième élément de commutation (S5, S6) ,
- pour la quatrième vitesse de marche avant, le troisième et le cinquième élément de commutation (S3, S5),
- pour la cinquième vitesse de marche avant, le premier et le sixième élément de commutation (S1, S6),
- pour la sixième vitesse de marche avant, le premier et le troisième élément de commutation (S1, S3),
- pour la septième vitesse de marche avant, le premier et le cinquième élément de commutation (S1, S5), et
- pour la huitième vitesse de marche avant, le premier et le quatrième élément de commutation (S1, S4).

3. Transmission selon la revendication 1, **caractérisée en ce que** la transmission (1) présente neuf vitesses de marche avant et, les éléments de commutation suivants étant fermés pour la commutation des vitesses suivantes :
pour la première vitesse de marche avant, le deuxième et le sixième élément de commutation (S2, S6),
- pour la deuxième vitesse de marche avant, le quatrième et le sixième élément de commutation (S4, S6) ,
- pour la troisième vitesse de marche avant, le troisième et le sixième élément de commutation (S3, S6),
- pour la quatrième vitesse de marche avant, le cinquième et le sixième élément de commutation (S5, S6),
- pour la cinquième vitesse de marche avant, le troisième et le cinquième élément de commutation (S3, S5),
- pour la sixième vitesse de marche avant, le premier et le sixième élément de commutation (S1, S6),
- pour la septième vitesse de marche avant, le premier et le troisième élément de commutation (S1, S3),
- pour la huitième vitesse de marche avant, le premier et le cinquième élément de commutation (S1, S5), et
- pour la neuvième vitesse de marche avant, le premier et le quatrième élément de commutation (S1, S4).

4. Transmission selon l'une quelconque des revendications précédentes, **caractérisée en ce que** pour la commutation d'une vitesse de marche arrière le deuxième et le cinquième élément de commutation (S2, S5) sont fermés.
